(19) **Europäisches Patentamt / European Patent Office / Office européen des brevets**

(11) **EP 2 394 972 B1**

(12) **EUROPEAN PATENT SPECIFICATION**

(45) Date of publication and mention
of the grant of the patent:
**21.08.2013 Bulletin 2013/34**

(51) Int Cl.:
*C04B 35/109* (2006.01)   *C04B 35/18* (2006.01)
*C04B 35/653* (2006.01)   *C04B 38/00* (2006.01)

(21) Application number: **11004681.0**

(22) Date of filing: **08.06.2011**

(54) **Light-weight refractory aggregate**

Leichtgewichtiges feuerfestes Aggregat

Agrégat réfractaire léger

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2010 JP 2010131858**

(43) Date of publication of application:
**14.12.2011 Bulletin 2011/50**

(73) Proprietor: **AGC Ceramics Co., Ltd.**
**Tokyo, 108-0014 (JP)**

(72) Inventors:
  • **Ushimaru, Yukihiro**
    **Takasago-shi**
    **Hyogo (JP)**

  • **Hayashi, Shinya**
    **Takasago-shi**
    **Hyogo (JP)**

(74) Representative: **Müller-Boré & Partner**
**Patentanwälte**
**Grafinger Straße 2**
**81671 München (DE)**

(56) References cited:
**WO-A1-2009/072627    GB-A- 2 055 787**
**JP-A- 2 277 544    US-A1- 2007 015 655**

  • **A.N. GAODU; ET AL: "Hollow granules and lightweight refractories from them for high-temperature heat insulation", UKRAINIAN SCIENTIFIC-RESEARCH INSTITUTE FOR REFRACTORIES, vol. 9, 1 January 1976 (1976-01-01), pages 569-571, XP9152300,**

**Description**

The present invention relates to a light-weight refractory aggregate comprising light-weight ceramic particles containing alumina and zirconia as main chemical components, in particular, to a light-weight refractory aggregate which is thermally and chemically stable, which has a high strength and a low thermal conductivity.

The temperature of an apparatus such as a melting furnace used under high temperature conditions becomes extremely high, and if such a heat is emitted to the outside directly, working conditions and working efficiency become extremely severe. As a measure for this problem, such an apparatus is covered with refractories for preventing conduction of internal heat to the outside.

As a raw material of such a refractory, a refractory aggregate is employed as the main component. A refractory aggregate is a component determining the refractory performance, the strength etc. of the refractory, and from the viewpoint of improving the heat insulation property or reducing the weight, hollow refractories have been employed (refer to Patent Documents 1 and 2).

Such a hollow refractory aggregate is usually produced by an electric fusion method or a sintering method. In recent years, a hollow light-weight ceramic material made of an alumina having a purity of at least 99 mass% has become commercially available, and is used as a refractory raw material. Here, as refractory particles such as hollow particles produced by an electric fusion method, ones described in Patent Document 3 are present.

Further, a hollow ceramic material made of zirconia having a purity of at least 99 mass% produced by an electric fusion method is also commercially available, and is used as a raw material for refractories.

Patent Document 1: JP-A-3-39031

Patent Document 2: JP-A-2009-263145

Patent Document 3: WO2009/072627

However, hollow ceramic particles made of alumina have such problems that since the thermal conductivity of the material is high, the thickness of each hollow particle needs to be thin in order to achieve a sufficient low thermal conductivity, and accordingly, the strength becomes low and the particles become fragile.

Further, hollow ceramic particles made of zirconia usually have uneven particle size, a high cost, and a high bulk density. Accordingly, such hollow ceramic particles are not usually used as heat insulation material, but used as a zirconia-containing raw material for e.g. refractories.

The mineral of zirconia is baddeleyite, which undergoes transition at about 1,100°C to change the structure, and accordingly, when a temperature change is applied to particles, cracks are formed to deteriorate the strength of the particles as structural bodies. Accordingly, it has been difficult to use such particles simply as constituent particles of a refractory.

In order to overcome the above unsuitability as a raw material for refractories due to the transition at about 1,100°C, a zirconia raw material stabilized by adding e.g. CaO is also commercially available. However, such a material is further expensive, and accordingly, little such a material is used as a raw material for refractories used as a structural member at present.

Further, as conventional low-weight refractory aggregates, those of silica type and fiber type are employed, but their melting points are about 1,000°C and 1,500°C, respectively, and they are not sufficient in the heat resistance.

The present invention has been made to solve the above problems, and it is an object of the present invention to provide a light-weight refractory aggregate which is light-weight and has a low thermal conductivity, and which is suitable as a raw material for a refractory having a sufficient strength.

The light-weight refractory aggregate of the present invention is an alumina-zirconia type refractory aggregate containing $Al_2O_3$ and $ZrO_2$ as essential components, which comprises hollow particles containing from 67 to 99 mass% of $Al_2O_3$ component and from 1 to 33 mass% of $ZrO_2$ component, wherein the total amount of $Al_2O_3$ and $ZrO_2$ is at least 96 mass%.

By the light-weight refractory aggregate of the present invention, it is possible to provide a new refractory aggregate which is light-weight and easy to handle, which has low heat conductivity and is thus excellent in heat insulation property, and which has a sufficient strength. Further, by employing the refractory aggregate as a raw material of a refractory, a refractory having a sufficient refractory performance can be obtained.

In the accompanying drawings:

Fig. 1 is a conceptual view of a method for producing particles in a melting method.
Fig. 2 is a view showing the relation between bulk density and heat conductivity in Example.
Fig. 3 is a view showing the relation between $ZrO_2$ content and volume compression ratio in Example.

The light-weight refractory aggregate of the present invention contains $Al_2O_3$ component and $ZrO_2$ component as essential chemical components, and the light-weight refractory aggregate comprises alumina-zirconia type hollow particles containing from 67 to 99 mass% of $Al_2O_3$ component and from 1 to 33 mass% of $ZrO_2$ component, wherein

the total amount ($Al_2O_3$+$ZrO_2$) is at least 96 mass%.

If the content of $Al_2O_3$ component is less than 67 mass% and the content of $ZrO_2$ component exceeds 33 mass%, the ratio of zirconia becomes too high, volume change caused by phase transition of zirconia cannot be absorbed and cracks tend to be formed in particles, which may deteriorate particle strength. Further, since the ratio of zirconia having a higher specific gravity than alumina becomes high, the mass increases, which is problematic from the viewpoint of light-weight that is an object of the present invention. Further, since the unit price of zirconia is high, such a material may be a problematic also in terms of production cost. On the other hand, if the content of $Al_2O_3$ component exceeds 99 mass% and the content of $ZrO_2$ component is less than 1 mass%, sufficient strength cannot be obtained. Here, the content of $Al_2O_3$ component is preferably from 68 to 99 mass% and the content of $ZrO_2$ component is preferably from 1 to 32 mass% for the same reason as the above.

Further, when their total amount ($Al_2O_3$+$ZrO_2$) is less than 96 mass%, the remaining components are present as impurities, the balance of the above effects becomes poor, whereby a refractory aggregate having the objective properties of the present invention cannot be obtained. The total amount is preferably at least 98 mass% since the balance of the above effects becomes good and the objective characteristics of the present invention is suitably developed in such case. Further, in a case of producing the light-weight refractory particles by an electric fusion method, if the total amount is less than 96 mass%, the melting temperature may become too low to produce hollow light-weight refractory aggregate particles. When the light-weight refractory particles are produced by electric fusion method, the above total amount is more preferably at least 98 mass%.

Usually a stable crystal structure of $ZrO_2$ at room temperature is monoclinic phase which undergoes a phase transition at around 1,100°C to show a large volume change, whereby production of a fired product is difficult from $ZrO_2$ as it is. Usually, e.g. CaO etc. is added to a refractory raw material containing $ZrO_2$ component as the main component to make the material have a stable cubic crystal to use the material.

On the other hand, in the present invention, by mixing $Al_2O_3$ component and $ZrO_2$ component at a predetermined ratio to form a structure wherein a corundum mineral and a baddeleyite mineral are complexly tangled, it is possible to obtain a thermally stable refractory aggregate even if it contains $ZrO_2$ of monoclinic phase being not stable at a high temperature. Specifically, the present invention efficiently suppresses formation of cracks in the particles even if the particles are applied with a heat cycle across the transition temperature of $ZrO_2$ component, in order to make it possible to use the $ZrO_2$ component as a refractory raw material.

Here, the content of $ZrO_2$ component is preferably at least 3 mass% from the viewpoint of sufficient strength of particles for preventing collapse of the particles and lowering the thermal conductivity, and preferably at most 31.5 mass% from the viewpoint of effectively preventing the particles from being cracked even if a heat cycle of from 850°C to 1,250°C across the transition temperature of zirconia is applied. The content of $ZrO_2$ component is more preferably at most 31 mass%.

The light-weight refractory aggregate of the present invention preferably has a particle size of from 50 $\mu$m to 5 mm as a light-weight refractory aggregate, the particle size is more preferably from 50 $\mu$m to 2 mm. Further, the light-weight refractory aggregate of the present invention more preferably comprises alumina-zirconia type hollow particles containing at least 90 mass% of such particles having a particle size of from 100 $\mu$m to 1 mm, particularly particles having a particle size of from 100 $\mu$m to 600 $\mu$m.

Further, the range of particle size of the light-weight refractory aggregate may be appropriately selected according to its application, and for example, the range is preferably from 100 $\mu$m to 5 mm, more preferably from 100 $\mu$m to 1 mm in a case of irregular-shaped refractory application. The range is preferably from 100 $\mu$m to 3 mm, more preferably from 100 $\mu$m to 2 mm in a case of light-weight bonded brick application.

In a case of using the light-weight refractory aggregate of the present invention as an aggregate for heat-insulating castable, if the particle size exceeds 5 mm, the thermal conductivity of the heat-insulating castable may become high. Accordingly, in the powder composition for heat-insulating castable of the present invention, the particle size of the light-weight refractory aggregate is preferably less than 5 mm. The particle size of the light-weight refractory aggregate is more preferably less than 2 mm. Further, the particle size of the light-weight refractory aggregate is more preferably at most 1.5 mm, particularly preferably at most 1.0 mm.

Here, in this specification, the particle size is defined as an opening diameter of a JIS mesh. The particle size of the light-weight refractory aggregate is preferably from 100 to 425 $\mu$m in order to obtain an appropriate fluidity of a tamped clay produced by adding water to a powder composition containing the light-weight refractory aggregate and kneading the aggregate.

The light-weight refractory aggregate of the present invention preferably has a bulk density of from 0.5 to 1.8 in order to impart heat insulation property to a product employing the aggregate and to reduce the weight of the refractory. The bulk density is more preferably at most 1.5, particularly preferably at most 1.2. Meanwhile, when the bulk density of the light-weight refractory aggregate is less than 0.5, the strength of the particles becomes low, such being not preferred, and the bulk density is preferably at least 0.6, more preferably at least 0.7.

The thermal conductivity of the light-weight refractory aggregate of the present invention is an important property of a refractory aggregate since it influences on the heat insulation property of the refractory. The thermal conductivity is preferably within a range of from 0.3 to 0.6 W/m · K at 1,000°C. When the thermal conductivity is within this range, a refractory employing the light-weight refractory aggregate of the present invention has a lower thermal conductivity and more improved heat insulation property as compared with conventional refractories.

This thermal conductivity is mainly determined by the chemical component of the light-weight refractory aggregate, the porosity at a time of constituting a refractory and the distribution of the size of pores. In the present invention, since $Al_2O_3$ component and $ZrO_2$ component having lower thermal conductivities than that of $Al_2O_3$ are mixed to form hollow particles, it is possible to make the thermal conductivity lower than that of hollow particles containing $Al_2O_3$ as the main component, and to improve the heat insulation property of the refractory aggregate.

Further, the light-weight refractory aggregate of the present invention is successful in obtaining a high fire resistance of a refractory employing the refractory aggregate, and the light-weight refractory aggregate of the present invention preferably has a melting temperature (melting point) of at least 1,700°C in order to balance the light-weight, a good heat insulation property and a good heat resistance. The melting temperature is more preferably at least 1,750°C, particularly preferably at least 1,800°C. Here, the heat resistance of the refractory may be expressed by the degree of fire resistance, and the melting temperature corresponds to a degree of fire resistance of from 39 to 42.

Further, the light-weight refractory aggregate of the present invention preferably has a practical strength from the viewpoint of e.g. improving the quality of a refractory. Since it is difficult to directly measure the strength of hollow particles, in this specification, the strength is evaluated by filling particles having a known volume into a mold and measuring the height of the particles when a pressure of 20 kg/cm$^2$ is applied to the particles, to obtain a volume compression ratio (strength evaluation 1). The volume compression ratio is preferably at most 6%, more preferably at most 3%. Further, as another evaluation method (strength evaluation 2), the strength is evaluated by counting collapsed particles in about 120 to 150 particles having a particle size of from 300 to 600 $\mu$m, and dividing the counted number by the total particle number to calculate a collapsed particle ratio. The collapsed particle ratio is preferably less than 2.0%, more preferably at most 1.0%.

This is an effect of combining $Al_2O_3$ component and $ZrO_2$ component, and the strength is higher than the strength of a refractory aggregate constituted by $Al_2O_3$ component alone. Accordingly, when a refractory is constituted by the light-weight refractory aggregate of the present invention, it is possible to prevent variation of the shape or the performance of the refractory due to e.g. collapse of the aggregate, and to produce a stable refractory.

The starting raw material of the light-weight refractory aggregate of the present invention is produced by mixing the raw materials $Al_2O_3$ and $ZrO_2$ at a predetermined composition ratio so that the $Al_2O_3$ component and the $ZrO_2$ component are contained at a ratio of $Al_2O_3$ component and $ZrO_2$ component to be obtained.

As a method for producing the light-weight refractory aggregate, a sintering method or an electric fuse-wind pulverization method is usually employed. In the former method, spherical particles of e.g. organic material are employed as core particles and coating the core particles with the raw material and baking them to vaporize the core material such as organic material to produce hollow raw material for refractories. Further, in the later method, as described in WO2009/072627 (Patent Document 3), a raw material having a predetermined composition is melted by e.g. an arc type electric furnace, and e.g. a high pressure air is blown against the melted raw material to form hollow particles. The light-weight refractory aggregate of the present invention can be obtained by any one of these methods, and the electric fusion method is advantageous for the reason of production cost.

Further, in the sintering method, it is possible to optionally select the composition, but in the electric fusion method, the total amount of $Al_2O_3$ component and $ZrO_2$ component is preferably at least 96 mass%, more preferably at least 98 mass%. The total amount is particularly preferably at least 99.3 mass%. In the electric fusion method, if the content of impurity components becomes high, lowering of melting temperature of a raw material usually occurs, and as a result, hollow particles cannot be produced or the bulk density does not decrease and a hollow refractory aggregate having a light-weight and achieving low thermal conductivity cannot be obtained in some cases.

Here, inclusion of the impurity components in the raw material is not a problem if the impurity components are removed in the process of the production method. For example, as described in WO2009/072627 (Patent Document 3), a used refractory is recycled to increase the content of $Al_2O_3$ component and $ZrO_2$ component, and an electric fusion method is used to produce high oxidizing refractory particles simply with good productivity.

Now, the present invention will be described in further detail with reference to Examples and Comparative Examples, but the present invention is by no means limited to these descriptions.

An arc type melting furnace having a furnace inner diameter of 800 mm, a height of 600 mm and an in-furnace volume of 0.6 m$^3$ was used as a testing furnace, and a transformer of 500 kVA was used. Here, as a lining refractory of the melting furnace, an electrocasted refractory having an $Al_2O_3$ content of at least 97% was employed.

As the $Al_2O_3$ raw material, a Bayer alumina having a purity of at least 99.3% was employed, and as the $ZrO_2$ raw material, an electrically fused zirconia cullet having a purity of at least 99.5% was employed, and these materials were mixed at a predetermined composition, so that the ratio of $Al_2O_3$ component and $ZrO_2$ component became finally the ratio (mass%) shown in Table 1 to obtain a raw material to be melted.

This raw material to be melted was melted in the electric furnace, the melting conditions were such that the voltage was from 100 to 300 V, the electric power was from 100 to 400 kW, and the total processing time of the mixed raw material to be melted was from 20 to 30 minutes. The electric power required for the melting was about 2,000 kWh per 1 ton.

Next, from the lower side of the melted material flowing out from the furnace, a compressed air having a pressure of 4 MPa mixed with 0.4 L/sec of water was blown forward against the melted material to make the melted material into particles. The particles were recovered in a capturing container made of a metal protected by refractories, to obtain refractory particles. The flow velocity of the compressed air was 100 m/sec.

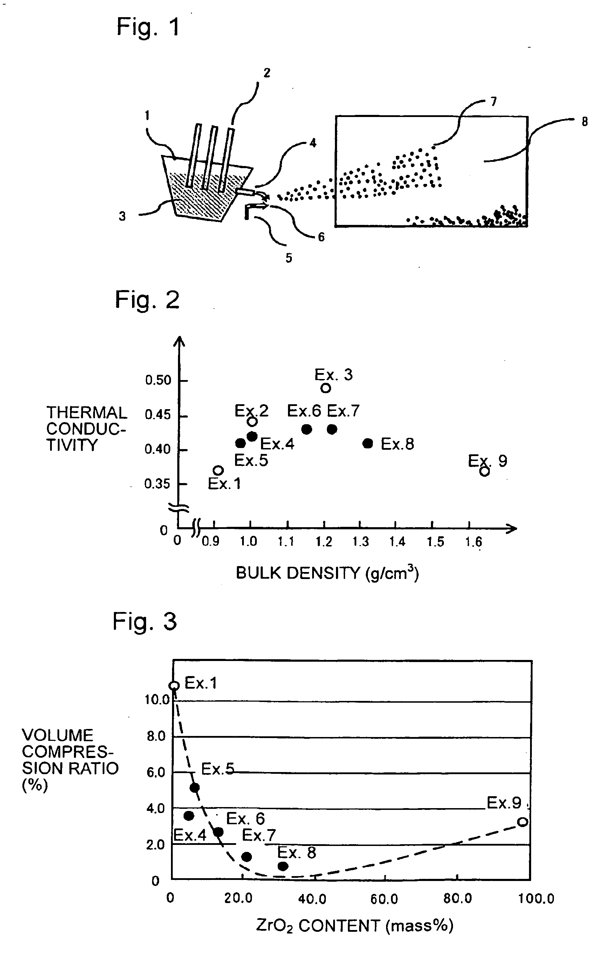

Here, Fig. 1 is a conceptual view showing forming of particles of the melted material, wherein 1 indicates a main body of melting furnace, 2 indicates electrodes for melting (melting electrodes) and 3 indicates a melted material. The melting electrodes 2 are connected to a power source via a control system, not shown. The melted material 3 is output from an output port 4, and a compressed air 6 and water are blown from a nozzle 5 disposed on the rear side of the output port 4 against the melted material to make the melted material float as particles 7 to be recovered into a capturing box 8. Since the particles are formed in a state that they are sufficiently oxidized by the compressed air, there is no need of e.g. a subsequent pulverizing step or a heat treatment step for oxidizing the particles.

At least 95% of the obtained particles have a particle size within a range of from 0.1 to 4 mm, and at least 98% of them have a particle size within a range of from 0.05 to 15 mm. At this time, the peak particle size was 1.2 mm.

Table 1 shows the result of analyzation of chemical components of the obtained refractory particles by a fluorescent X-ray diffraction instrument (manufactured by Rigaku Corporation). Examples 1 to 3 and Example 9 are Comparative Examples, and Examples 4 to 8, 12 and 13 are Examples of the present invention. Examples 10 and 11 are Reference Examples showing the physical properties of electrocasted refractories. Example 10 is an alumina type electrocasted refractory, and Example 11 shows a zirconia type electrocasted refractory. Here, in the Table, the melting temperature (°C) was read out from the chemical composition and the $ZrO_2$-$Al_2O_3$ state diagram.

From Examples 4 to 9, the zirconia content was gradually increased, and finally, particles having a zirconia content of about 98 mass% was prepared, and the bulk density was measured with respect to particles of from 0.1 to 1.0 mm in the same manner.

TABLE 1

| | | Ex. 1 | Ex. 2 | Ex. 3 | Ex. 4 | Ex. 5 | Ex.6 |
|---|---|---|---|---|---|---|---|
| Composition | $ZrO_2$ | 0.0 | 0.0 | 0.0 | 4.6 | 6.4 | 12.8 |
| | $Al_2O_3$ | 99.7 | 99.6 | 99.4 | 95.1 | 93.1 | 86.8 |
| | Others | 0.3 | 0.4 | 0.6 | 0.3 | 0.5 | 0.4 |
| Bulk density | | 0.91 | 1.02 | 1.20 | 1.02 | 0.97 | 1.15 |
| Thermal conductivity | 20°C | 0.27 | 0.31 | 0.32 | 0.28 | 0.27 | 0.30 |
| | 500°C | 0.38 | 0.47 | 0.52 | 0.45 | 0.42 | 0.47 |
| | 1,000°C | 0.47 | 0.55 | 0.63 | 0.54 | 0.53 | 0.51 |
| | Average | 0.37 | 0.44 | 0.49 | 0.42 | 0.41 | 0.43 |
| Melting temp./°C | | 2048 | 2047 | 2045 | 2012 | 1998 | 1945 |
| Heat cycle test | | ○ | ○ | ○ | ○ | ○ | ○ |
| Porosity/% | | 77 | 74 | 70 | 75 | 76 | 73 |
| Volume compression ratio/% | | 10.4 | - | - | 3.8 | 5.0 | 2.5 |
| Strength evaluation 1 | | × | Δ | Δ | ○ | ○ | ○ |
| Collapsed particle ratio/% | | 3.5 | 3.0 | 2.0 | 1.5 | 0.9 | 0.8 |
| Strength evaluation 2 | | × | × | × | Δ | ○ | ○ |

TABLE 2

|  |  | Ex. 7 | Ex.8 | Ex. 9 | Ex. 10 | Ex. 11 | Ex. 12 | Ex.13 |
|---|---|---|---|---|---|---|---|---|
| Composition | $ZrO_2$ | 21.1 | 31.4 | 98.4 | 0.0 | 94.5 | 28.8 | 29.7 |
|  | $Al_2O_3$ | 78.3 | 68.2 | 1.2 | 99.1 | 1.0 | 69.4 | 67.4 |
|  | Others | 0.6 | 0.4 | 0.4 | 0.9 | 4.5 | 1.8 | 2.9 |
| Bulk density |  | 1.22 | 1.32 | 1.64 | 3.80 | 5.30 | 1.10 | 1.05 |
| Thermal conductivity | 20°C | 0.31 | 0.29 | 0.26 | 10.0 | 3.5 | 0.28 | 0.30 |
|  | 500°C | 0.46 | 0.44 | 0.36 | 6.5 | 3.1 | 0.42 | 0.43 |
|  | 1,000°C | 0.52 | 0.51 | 0.49 | 6.1 | 2.9 | 0.53 | 0.49 |
|  | Average | 0.43 | 0.41 | 0.37 | 7.53 | 3.17 | 0.39 | 0.35 |
| Melting temp./°C |  | 1878 | 1943 | 2585 | - | - | 1938 | 1939 |
| Heat cycle test |  | ○ | ○ | × | - | - | ○ | ○ |
| Porosity/% |  | 72 | 71 | 70 | 4 | 1 | 74 | 75 |
| Volume compression ratio/% |  | 1.2 | 0.6 | 3.3 | - | - | 1.1 | 1.3 |
| Strength evaluation 1 |  | ○ | Δ | - | - | - | ○ | ○ |
| Collapsed particle ratio/% |  | 0.9 | 1.1 | 2.8 | - | - | 0.8 | 0.7 |
| Strength evaluation 2 |  | ○ | ○ | × | - | - | ○ | ○ |

[Bulk density]

Bulk density was obtained by putting particles of from 0.1 to 1.0 mm into a container whose volume is known, tapping the container lightly three times to fill the container with the particles, striking the particles and measuring the mass. The reason why the particle size of the particles was unified is to reduce variation factor.

In Examples 1 to 3, only alumina raw materials were melted. As a result, the alumina content became from 99.4 to 99.7 mass%, and the bulk density of 0.1 to 1.0 mm particles was 0.9 to 1.2 g/cm$^3$, respectively. The reason why the bulk density became inconstant within a range of from 0.9 to 1.2, is considered to be because refractories around the material is melted to lower the purity. In Examples 4 to 9, wherein the zirconia content was gradually increased, the bulk density was varied. This variation of bulk density is also considered to be due to the influence of slight impurities.

[Thermal conductivity]

Next, with respect to each of samples of Examples 1 to 9, thermal conductivities (W/(m · K)) at room temperature (20°C), 500°C, 1,000°C were measured. For this measurement of thermal conductivity, particles having a particle size of from 0.1 mm to 1.0 mm classified by a mesh were employed. An automatic thermal conductivity measuring system (manufactured by Speinlab, product name: HWM-15) was employed for the thermal conductivity measurement.

Table 2 also shows the thermal conductivities of an alumina type electrocast bricks (Example 10) and zirconia type electrocast bricks (Example 11) produced in the same manner by an electric fusion method for reference. According to these data, alumina shows at least twice as high thermal conductivity as that of zirconia, and the difference is large particularly at room temperature.

Fig. 2 shows the relation between bulk density and thermal conductivity (average of those at 20°C, 500°C and 1,000°C). From the relation between thermal conductivities and bulk densities of the alumina-composition hollow particles (Examples 1 to 3) and alumina type electrocast bricks (Example 10), it is understandable that the thermal conductivity increases as the bulk density increases. Meanwhile, by replacing a part of alumina by zirconia, the thermal conductivity remains unchanged or shows a slight decrease as the bulk density increases.

The thermal conductivity of the zirconia type electrocast bricks (Example 11) shown as a Reference Example is less than 1/2 of that of alumina type electrocast bricks (Example 10), which indicates that the reason why the thermal conductivity decreases as the amount of zirconia increases is because the thermal conductivity of zirconia is lower than that of alumina.

[Heat cycle test]

Next, in order to confirm thermal stability of the particles, the temperature was raised and lowered 40 cycles from 850°C to 1,250°C across 1,100°C being the transition temperature of zirconia at a temperature raising/lowering speed of 100°C/h, and the ratio of cracks formed in the particles (number base) was observed by a microscope.

A sample wherein no crack was observed or cracks were observed in at most 1% of the particles was rated as ○, a sample wherein cracks were observed in more than 1% and at most 10% of the particles was rated as Δ, and a sample wherein cracks were observed in more than 10% of the particles was rated as x.

As a result, in Examples 1 to 8 having a zirconia content of from 0 to 31.4%, no crack was formed. Further, in Example 9 having a zirconia content of 98.4%, cracks were observed in more than 10% of the particles.

[Volume compression rate]

Each of particle samples having a constant volume was put in a mold having a diameter of 50 mm, a pressure of 20 kg/cm$^2$ was applied, and from the height of the sample, a volume compression ratio was obtained and evaluated. A sample having a volume compression ratio of less than 3% was rated as ○, a sample having a volume compression ratio of at least 3% and less than 6% was rated as Δ, and a sample having a volume compression ratio of at least 6% was rated as × (strength evaluation 1). Here, in a case of evaluating the strength of hollow particles, it is necessary to compare samples having the same degree of porosities. Since it is not possible to directly measure the strength, the strength was calculated from a theoretical specific weight = $4.0 \times Al_2O_3$ amount + $5.6 \times ZrO_2$ amount and the above bulk density according to the following formula (1).

$$((\text{Theoretical specific weight-bulk density})/\text{theoretical specific weight}))\times 100 \ (\%)$$

$$(1)$$

Further, Fig. 3 shows the relationship between $ZrO_2$ content in the particles and the volume compression ratio. It has been confirmed that by containing $ZrO_2$, the volume compression ratio decreases and the strength of the particles increases.

[Collapsed particle ratio]

About from 120 to 150 particles having a particle size of from 300 μm to 600 μm were prepared, the number of collapsed particles in the prepared particles were counted, and it was divided by the total number of particles to calculate the collapsed particle ratio. A sample having a collapsed particle ratio of at most 1% was rated as ○, a sample having a collapsed particle ratio of more than 1% and less than 2% was rated as Δ and a sample having a collapsed particle ratio of at least 2% was rated as × (strength evaluation 2).

The present invention relates to hollow refractory particles containing alumina and zirconia as essential components, which is light-weight and has a sufficient particle strength, which has a heat insulation property and a heat resistance at the same time, and accordingly, which is suitable for a refractory having a heat insulation property and a heat resistance at the same time.

REFERENCE SYMBOLS

1 ... Melting furnace main body, 2 ... Melting electrode, 3 ... Melted material, 4 ... Output port, 5 ... Nozzle, 6 ... Compressed air, 7 ... particles, 8 ... Capturing box

**Claims**

**1.** A light-weight refractory aggregate which is an alumina-zirconia type refractory aggregate containing $Al_2O_3$ and $ZrO_2$ as essential components, which comprises hollow particles containing from 67 to 99 mass% of $Al_2O_3$ and from 1 to 33 mass% of $ZrO_2$, wherein the total amount of $Al_2O_3$ and $ZrO_2$ is at least 96 mass%.

**2.** The light-weight refractory aggregate according to Claim 1, wherein the bulk density of the hollow particles is from 0.5 to 1.8.

**3.** The light-weight refractory aggregate according to Claim 1 or 2, wherein the thermal conductivity of the hollow particles at 1,000 °C is from 0.3 to 0.6 W/m· K.

**4.** The light-weight refractory aggregate according to any one of Claims 1 to 3, wherein the melting temperature of the hollow particles is at least 1,700°C.

**5.** The light-weight refractory aggregate according to any one of Claims 1 to 4, wherein the total amount of $Al_2O_3$ and $ZrO_2$ is at least 98 mass%.

**6.** The light-weight refractory aggregate according to any one of Claims 1 to 5, wherein the hollow particles are obtained by a melting method.

**Patentansprüche**

**1.** Ein leichtgewichtiges feuerfestes Aggregat, welches ein feuerfestes Aggregat des Aluminiumoxid-Zirconiumoxid-Typs, enthaltend $Al_2O_3$ und $ZrO_2$ als wesentliche Bestandteile, ist, welches Hohlteilchen, enthaltend 67 bis 99 Massenprozent $Al_2O_3$ und 1 bis 33 Massenprozent $ZrO_2$, umfasst, wobei die Gesamtmenge von $Al_2O_3$ und $ZrO_2$ mindestens 96 Massenprozent beträgt.

**2.** Leichtgewichtiges feuerfestes Aggregat nach Anspruch 1, wobei die Schüttdichte der Hohlteilchen 0,5 bis 1,8 beträgt.

**3.** Leichtgewichtiges feuerfestes Aggregat nach Anspruch 1 oder 2, wobei die Wärmeleitfähigkeit der Hohlpartikel bei 1000°C 0,3 bis 0,6 W/m · K beträgt.

**4.** Leichtgewichtiges feuerfestes Aggregat nach einem der Ansprüche 1 bis 3, wobei die Schmelztemperatur der Hohlteilchen mindestens 1700°C beträgt.

**5.** Leichtgewichtiges feuerfestes Aggregat nach einem der Ansprüche 1 bis 4, wobei die Gesamtmenge von $Al_2O_3$ und $ZrO_2$ mindestens 98 Massenprozent beträgt.

**6.** Leichtgewichtiges feuerfestes Aggregat nach einem der Ansprüche 1 bis 5, wobei die Hohlteilchen durch ein Schmelzverfahren erhalten werden.

**Revendications**

**1.** Agrégat réfractaire léger qui est un agrégat réfractaire de type alumine-zircone contenant de l'$Al_2O_3$ et du $ZrO_2$ en tant que composants essentiels, qui comprend des particules creuses contenant de 67 à 99 % en masse d'$Al_2O_3$ et de 1 à 33 % en masse de $ZrO_2$, dans lequel la quantité totale d'$Al_2O_3$ et de $ZrO_2$ est d'au moins 96 % en masse.

**2.** Agrégat réfractaire léger selon la revendication 1, dans lequel la densité apparente des particules creuses est de 0,5 à 1,8.

**3.** Agrégat réfractaire léger selon la revendication 1 ou 2, dans lequel la conductivité thermique des particules creuses à 1000°C est de 0,3 à 0,6 W/m·K.

**4.** Agrégat réfractaire léger selon l'une quelconque des revendications 1 à 3, dans lequel le point de fusion des particules creuses est d'au moins 1700°C.

**5.** Agrégat réfractaire léger selon l'une quelconque des revendications 1 à 4, dans lequel la quantité totale d'$Al_2O_3$ et de $ZrO_2$ est d'au moins 98 % en masse.

**6.** Agrégat réfractaire léger selon l'une quelconque des revendications 1 à 5, dans lequel les particules creuses sont obtenues par un procédé de fusion.

## Fig. 1

## Fig. 2

BULK DENSITY (g/cm³)

## Fig. 3

ZrO₂ CONTENT (mass%)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3039031 A
- JP 2009263145 A

- WO 2009072627 A